# EUROPÄISCHE PATENTSCHRIFT

(11) **EP 0 669 352 B1**
(45) Veröffentlichungstag und Bekanntmachung des Hinweises auf die Patenterteilung: **09.12.1998**
(21) Anmeldenummer: 95101908.2
(22) Anmeldetag: 13.02.1995
(51) Int. Cl.: C08G 18/66, C08G 18/08, C08G 18/44, C09D 175/04

(54) **Wässrige Polyester-Polyurethan-Dispersionen und ihre Verwendung in Beschichtungsmitteln**
Aqueous polyester-polyurethane dispersions and their use in coating compositions
Dispersions aqueuses de polyester-polyuréthane et leur utilisation dans des compositions de revêtement

(30) Priorität: 25.02.1994 DE 4406159
(43) Veröffentlichungstag der Anmeldung: 30.08.1995
(73) Patentinhaber: BAYER AG, 51368 Leverkusen (DE)
(72) Erfinder: Blum, Harald, Dr., D-47669 Wachtendonk (DE); Petzoldt, Joachim, Dr., D-40789 Monheim (DE)

(56) Entgegenhaltungen:
- EP-A- 0 140 323
- EP-A- 0 427 028
- EP-A- 0 496 205
- EP-A- 0 578 940

## Beschreibung

Die Erfindung betrifft neue wäßrige Dispersionen von Polyester-Polyurethanen auf Basis von ausgewählten, im wesentlichen difunktionellen Ausgangsmaterialien, ihre Verwendung zur Herstellung von Beschichtungsmitteln und ein Beschichtungsmittel, welches als wesentliche Bindemittelkomponente Polyester-Polyurethane der genannten Art enthält. Die erfindungsgemäßen Beschichtungsmittel eignen sich insbesondere als Softfeellack.

Moderne, wäßrige Bindemittel sind in der Lage, in vielen Anwendungen organisch gelöste Bindemittel zu substituieren. Dies gilt vor allem für solche Bereiche, in denen wäßrige Bindemittel spezifische Vorteile aufweisen können, wie z.B. in der Elektrotauchlackierung.

Für Anwendungen mit sehr speziellen Anforderungsprofilen, wie z.B. die Lackierung bzw. Beschichtung von Kunststoffen mit Softfeeleffektlacken fehlen bis jetzt überzeugende wäßrige Bindemittel, die den gestellten Anforderungen gerecht werden.

Das von den organisch gelösten Softfeellacken auf Polyurethanbasis (z.B. PCT-Anmeldung WO 92 15 636 oder japanische Patentanmeldung 279 620 vom 26.11.1986 mit der Veröffentlichungsnummer J63132-919-A) vorgegebene Eigenschaftsniveau, insbesondere bezüglich des Softfeeleffekts, der Lösemittelbeständigkeit, sowie der Filmmechanik und der Haftung auf dem Substrat, wird von wäßrigen Systemen noch nicht erreicht. Vor allem die Kombination eines guten Softfeeleffekts mit einer zufriedenstellenden Lösemittelbeständigkeit der Beschichtung ist mit wäßrigen Produkten bis jetzt nicht möglich.

Aus der EP-A-578 940 sind diesbezüglich wasserdispergierbare Polyurethanpolyole auf Basis verzweigter Polyesterpolyole bekannt.

Es war deshalb die der Erfindung zugrundeliegende Aufgabe, wäßrige Bindemittel zur Verfügung zu stellen, die für hochelastische Lacke, Beschichtungen und Dichtmassen, insbesondere für Softfeellacke, geeignet sind und einen guten Softfeeleffekt mit guter Filmmechanik und Haftung, sowie einer zufriedenstellenden Lösemittelbeständigkeit verbinden und darüber hinaus auch möglichst wenige flüchtige, organische Substanzen enthalten, um auch hohen Anforderungen bezüglich der Umweltverträglichkeit gerecht werden zu können.

Diese Aufgabe konnte mit der Bereitstellung der nachstehend näher beschriebenen wäßrigen Polyester-Polyurethan-Dispersionen bzw. den Beschichtungsmitteln auf Basis dieser Dispersionen gelöst werden.

Gegenstand der Erfindung sind wäßrige Dispersionen von Polyester-Polyurethanen mit einer Säurezahl von 5 bis 60 mg KOH/g Polyester-Polyurethan-Feststoff, einem Gehalt an Hydroxylgruppen von 0,25 bis 6,5 Gew.-% und an Urethangruppen (berechnet als -NH-CO-O-) von 2 bis 25 Gew.-%, jeweils bezogen auf Polyester-Polyurethan-Feststoff, dadurch gekennzeichnet, daß die Polyurethane, gegebenenfalls zumindest teilweise mit Basen neutralisierte, Umsetzungsprodukte darstellen von
a) insgesamt 15 bis 90 Gew.-% mindestens eines linearen Polyesterpolyols des Molekulargewichtsbereichs 500 bis 4000, wobei als Komponente a) Estergruppen aufweisende Polyole der auch als Komponente b) in Betracht kommenden Art ausgeschlossen sind,
b) insgesamt 4 bis 75 Gew.-% mindestens eines weiteren difunktionellen Polyols, ausgewählt aus der Gruppe bestehend aus i) Hydroxylgruppen aufweisenden Polycarbonaten des Molekulargewichtsbereichs 400 bis 6 000, ii) Hydroxylgruppen aufweisenden Polyetherpolyolen des Molekulargewichtsbereichs 350 bis 3 500 mit weniger als 30 Gew.-% an Ethylenoxideinheiten, bezogen auf alle in Form von Polyetherketten vorliegende Alkylenoxideinheiten und iii) Estergruppen aufweisenden, durch Hydrierung der Carboxylgruppen zu Hydroxylgruppen, Alkoxylierung der Carboxylgruppen oder Veresterung der Carboxylgruppen mit niedermolekularen Diolen von Dimerfettsäuren erhaltenen Polyesterpolyolen,
c) insgesamt 1 bis 10 Gew.-% mindestens einer Säurekomponente, bestehend aus i) Hydroxycarbonsäuren, ii) Aminocarbonsäuren, iii) Aminosulfonsäuren oder iv) Alkalisalzen derartiger Säuren,
d) insgesamt 0 bis 20 Gew.-% einer niedermolekularen Komponente, bestehend aus mindestens einer, mindestens zwei Hydroxyl- und/oder Aminogruppen enthaltenden Verbindung des Molekulargewichtsbereichs 60 bis 300,
e) insgesamt 0 bis 20 Gew.-% mindestens eines hydrophilen, Ethylenoxideinheiten aufweisenden ein- oder zweiwertigen Alkohols des Molekulargewichtsbereichs 350 bis 3000,
f) insgesamt 5 bis 50 Gew.-% einer Polyisocyanatkomponente, bestehend aus mindestens einem organischen Polyisocyanat des Molekulargewichtsbereichs 168 bis 1000, wobei mindestens 50 Gew.-% der Polyisocyanatkomponente linearaliphatische Diisocyanate des Molekulargewichtsbereichs 168 bis 300 darstellen,
wobei sich die genannten Prozentangaben zu 100 ergänzen.

Gegenstand der Erfindung ist auch die Verwendung dieser Dispersionen zur Herstellung von wäßrigen Beschichtungsmitteln auf Basis von in Wasser dispergierten Bindemitteln und Vernetzerharzen, ausgewählt aus der Gruppe bestehend aus Aminoplastharzen, gegebenenfalls hydrophil modifizierten blockierten Polyisocyanaten und gegebenenfalls hydrophil modifizierten Polyisocyanaten mit freien Isocyanatgruppen.

Gegenstand der Erfindung sind auch wäßrige, gegebenenfalls die üblichen Hilfs- und Zusatzstoffe enthaltenden Beschichtungsmittel, welche als Bindemittel eine Kombination aus
A) einer Polyolkomponente mit
B) einem Vernetzerharz, ausgewählt aus der Gruppe bestehend aus Melaminharzen, gegebenenfalls hydrophil modifizierten blockierten Polyisocyanaten und gegebenenfalls hydrophil modifizierten Polyisocyanaten mit freien Isocyanatgruppen,
enthält, dadurch gekennzeichnet, daß die Polyolkomponente A) zu 25 bis 100 Gew.-% aus einem Hydroxylgruppen aufweisenden Polyester-Polyurethan der erfindungsgemäß dispergiert vorliegenden Art und zu 0 bis 75 Gew.-% aus anderen, von diesen Polyester-Polyurethanen verschiedenen Bindemitteln besteht.

Die erfindungsgemäßen Polyester-Polyurethan-Dispersionen weisen im allgemeinen Festkörpergehalte von 15 bis 68, vorzugsweise 33 bis 60 Gew.-%, und bei 23°C rotationsviskosimetrisch bestimmte Viskositäten von 10 bis 20 000, vorzugsweise 50 bis 5 000 mPa.s auf. Der pH-Wert liegt zwischen 5 und 10, vorzugsweise bei 6 bis 8 und wird gemäß DIN 53 785 nach Verdünnen mit destilliertem Wasser auf einen Feststoffgehalt von 10 Gew.-% bestimmt. Der Begriff "Dispersion" soll im übrigen im Rahmen der Erfindung sowohl echte wäßrige Dispersionen als auch wäßrige Lösungen umfassen. Die Frage, ob es sich um Dispersionen oder Lösungen handelt, ist insbesondere vom Gehalt an salzartigen Gruppen und vom Molekulargewicht der Polymeren abhängig.

Die in den Dispersionen als disperse Phase vorliegenden Polyester-Polyurethane weisen, bezogen auf Feststoff, einen Gehalt an Urethangruppen (-NH-CO-O) von 2 bis 25, vorzugsweise 4 bis 19 Gew.-%, eine Säurezahl von 5 bis 60 mg KOH/g, vorzugsweise von 8 bis 40 mg KOH/g, wobei sich die Säurezahl sowohl auf freie Säuregruppen, als auch auf mit Basen neutralisierte Säuregruppen des Feststoffs bezieht, und einen Gehalt an Hydroxylgruppen von 0,3 bis 6,5, vorzugsweise 0,5 bis 3,5 Gew.-% auf. Die Wasserverdünnbarkeit der Polyester-Polyurethane ist im wesentlichen auf ihren Gehalt an den genannten anionischen Gruppen zurückzuführen.

Die Herstellung der Dispersionen erfolgt durch Umsetzung von 15 bis 90, vorzugsweise 27 bis 70 Gew.-% der Ausgangskomponente a) mit 4 bis 75, vorzugsweise 10 bis 60 Gew.-% der Ausgangskomponente b), 1 bis 10, vorzugsweise 2 bis 7 Gew.-% der Ausgangskomponente c), 0 bis 20, vorzugsweise 0,5 bis 10 Gew.-% der Ausgangskomponente d) und 0 bis 20, vorzugsweise 0 bis 10 Gew.-% der Ausgangskomponente e) mit 5 bis 50, vorzugsweise 7 bis 30 Gew.-% der Ausgangskomponente f), wobei sich die zu a) bis f) gemachten Prozentangaben zu 100 % ergänzen, in 40- bis 100-, vorzugweise 85- bis 100-%iger, organischer Lösung (100%ig = lösungsmittelfrei), wobei die Komponenten a), b), c), d) und e) gegebenenfalls mit Lösemittel vorgelegt und in Gegenwart von 0 bis 2,5, vorzugsweise 0,01 bis 0,5 Gew.-% geeigneter Katalysatoren bei 40 bis 160°C mit Komponente f) derart zur Reaktion gebracht werden, daß nach der Umsetzung praktisch keine freien NCO-Gruppen mehr nachweisbar sind. Bei dieser Umsetzung wird im allgemeinen unter Einhaltung eines Äquivalentverhältnisses von gegenüber Isocyanatgruppen reaktionsfähigen Gruppen zu Isocyanatgruppen von 1,2:1 bis 2,5:1, vorzugsweise 1,4:1 bis 2,0:1 gearbeitet, so daß letztendlich Umsetzungsprodukte mit dem obengenannten Hydroxylgruppengehalt resultieren. Gegebenenfalls im Reaktionsgemisch vorliegende, zur Überführung in anionische Gruppen bestimmte Carboxylgruppen sind hierbei nicht als "gegenüber Isocyanatgruppen reaktionsfähig" anzusehen.

Im Anschluß an die genannte Umsetzung wird das Reaktionsgemisch in Wasser dispergiert bzw. gelöst, wobei gegebenenfalls in das Reaktionsgemisch eingeführte Säuregruppen während der Umsetzung oder vor bzw. während des Dispergierschrittes durch Zugabe eines Neutralisationsmittels zu 25 bis 100, vorzugsweise zu 45 bis 100 % in Salzgruppen überführt werden. Ein Einbau von anionischen Gruppen auf diese Weise erübrigt sich selbstverständlich, wenn als Aufbaukomponente c) bereits Salze, insbesondere Alkalisalze, von geeigneten Amino- bzw. Hydroxycarbon- bzw. -sulfonsäuren zum Einsatz gelangen.

Bei den Ausgangskomponenten a) handelt es sich um im wesentlichen lineare Polyesterpolyole des Molekulargewichtsbereichs 500 bis 4000, vorzugsweise 600 bis 2400.

Der Begriff "linear" soll bedeuten, daß die Verbindungen im statistischen Mittel pro Molekül höchstens 0,5, vorzugsweise weniger als 0,3 und besonders bevorzugt weniger als 0,1 Verzweigungsstellen aufweisen, d.h., daß die (mittlere) Hydroxylfunktionalität bei maximal 2,5, vorzugsweise bei maximal 2,3 und besonders bevorzugt bei maximal 2,1 liegt. Der Begriff "im wesentlichen difunktionell" soll bedeuten, daß die Verbindungen im statistischen Mittel pro Molekül höchstens 0,1, vorzugsweise keine Verzweigungsstellen aufweisen, d.h. daß die mittlere Hydroxylfunktionalität bei maximal 2,1, vorzugsweise bei 2,0 liegt. Bei den Angaben bezüglich des Molekulargewichts der Ausgangskomponenten handelt es sich hier und auch vor- und nachstehend stets um das aus Hydroxylgruppengehalt und Hydroxylfunktionalität errechenbare mittlere Molekulargewicht.

Die Herstellung der Polyesterpolyole a) erfolgt durch Polykondensation von
a1) 25 bis 75, vorzugsweise 30 bis 65 Gew.-% aliphatischer Dicarbonsäuren bzw. deren Anhydride mit insgesamt 4 bis 50 Kohlenstoffatome, vorzugsweise von aliphatischen Dicarbonsäuren mit insgesamt 5 bis 45 Kohlenstoffatomen,
a2) 15 bis 70, vorzugsweise 20 bis 65 Gew.-% aliphatischer, gegebenenfalls Ether-, Ester- und/oder Carbonatgruppen enthaltender Diole mit einem Molekulargewicht von 62 bis 2 000,
a3) 0 bis 30, vorzugsweise 0 bis 15 Gew.-% einer Säurekomponente, ausgewählt aus der Gruppe bestehend aus cycloaliphatischen Di- und/oder Tricarbonsäuren des Molekulargewichtsbereichs 154 bis 198, aromatischen Di-und/oder Tricarbonsäuren des Molekulargewichtsbereichs 148 bis 192, Anhydriden derartiger Säuren und aliphatischen Monocarbonsäuren des Molekulargewichtsbereichts 144 bis 290, und
a4) 0 bis 10, vorzugsweise 0 bis 7 Gew.-%, an tri- oder höherfunktionellen Alkoholen des Molekulargewichtsbereichs 92 bis 200,
wobei sich die Prozentangaben zu a1) bis a4) zu 100 ergänzen und wobei die Umsetzung gegebenenfalls unter Zuhilfenahme üblicher Veresterungskatalysatoren, vorzugsweise nach dem Prinzip einer Schmelz- oder Azeotropkondensation bei Temperaturen von 140 bis 240°C erfolgt.

Beispiele geeigneter Säuren a1) bzw. entsprechender Anhydride sind Maleinsäure(anhydrid), Fumarsäure, Bernsteinsäure(anhydrid), Adipinsäure, Sebacinsäure, Azelainsäure, die unterschiedlichsten, handelsüblichen Dimerfettsäuren bzw. Gemische derartiger Säuren bzw. Säureanhydride. Die Dimerfettsäuren können in hydrierter oder nichthydrierter Form eingesetzt werden und können herstellungsbedingte Anteile an mono-, tri- bzw. höherfunktionellen Carbonsäuren enthalten. Geeignete, der obigen Definition der Komponente a1) entsprechende Dimerfettsäuren sind z.B. ®Pripol 1008, ®Pripol 1009, ®Pripol 1012, ®Pripol 1012, ®Pripol 1013, ®Pripol 1017, ®Pripol 1022, ®Pripol 1025 (Fa. Unichema).

Bevorzugte Komponente a1) sind Adipinsäure, Sebacinsäure, Azelainsäure und hydrierte Dimerfettsäuren mit Anteilen an Monocarbonsäuren von weniger als 5 Gew.-% und Anteilen an Tricarbonsäuren von weniger als 25 Gew.-%.

Ganz besonders bevorzugte Komponenten a1) sind Adipinsäure und die als bevorzugt genannten Dimerfettsäuren sowie Mischungen von Adipinsäure und den als bevorzugt genannten Dimerfettsäuren im Verhältnis von 0,35 bis 0,98 Äquivalenten Adipinsäure und 0,02 bis 0,65 Äquivalenten Dimerfettsäure, bezogen auf die Gesamtmenge an eingesetzter Komponente a1).

Bei der Ausgangskomponente a2) handelt es sich um gegebenenfalls Ether-, Ester-und/oder Carbonatgruppen enthaltende Diole des Molekulargewichts 62 bis 2 000. Geeignet sind insbesondere Ethylenglykol, 1,2- und 1,3-Propandiol, 1,3- und 1,4-Butandiol, 1,6-Hexandiol, Diethylenglykol, Dipropylenglykol, Neopentylglykol oder Mischungen derartiger Diole. Ferner geeignet sind Triethylenglykol, Tetraethylenglykol, Tripropylenglykol, Tetrapropylenglykol, Polycarbonatdiole des Hydroxylzahlbereichs 56 bis 168., welche z.B. durch Umsetzung von Diolen der genannten Art mit Diphenylcarbonat oder Phosgen erhalten werden, Dimerfettalkohole oder Gemische derartiger Diole, Mischungen dieser Diole oder Mischungen dieser Diole mit den vorstehend genannten besonders bevorzugten Diolen. Die Bezeichnung "Dimerfettalkohole" umfaßt hierbei Diole, wie sie aus technischen dimerisierten Fettsäuren erhalten werden können. Bei den dimerisierten Fettsäuren handelt es sich um solche, die zu mindestens 75 Gew.-% aus Dimersäuren, d.h. aus Dicarbonsäuren, bestehen, und die im Mittel 30 bis 45 Kohlenstoffatome pro Molekül aufweisen. Die Überführung der Dimerfettsäuren in Dimerfettalkohole kann beispielsweise durch Reduktion der Carboxylgruppen zu Hydroxylgruppen, Veresterung der Carboxylgruppen mit niedermolekularen Diolen der oben beispielhaft genannten Art oder durch Alkoxylierung der Carboxylgruppen, beispielsweise mit Ethylenoxid und/oder Propylenoxid, erfolgen. Ein gut als Komponente a2) geeigneter Dimerfettalkohol ist beispielsweise ®Pripol 2033 der Fa. Unichema.

Geeignete Ausgangskomponenten a3) sind beispielsweise Phthalsäure(anhydrid), Isophthalsäure, Tetrahydrophthalsäure(anhydrid), Hexahydrophthalsäure(anhydrid), 1,4-Cyclohexandicarbonsäure, Trimerfettsäuren, Dimerfettsäuren mit hohen Anteilen an Trimerfettsäuren, 2-Ethylhexansäure, Isononansäure, Kokosölfettsäure, hydrierte technische Fettsäuren, Ölsäure, Stearinsäure, Palmitinsäure, Sojaölfettsäure, Ricinusölfettsäure, Erdnußölfettsäure, Sonnenblumenfettsäure oder Gemische derartiger Säuren. Besonders bevorzugt sind Phthalsäureanhydrid, Isophthalsäure, Hexahydrophthalsäureanhydrid, Dimerfettsäuren mit hohen Anteilen an Trimerfettsäuren, Trimerfettsäuren, hydrierte technische Fettsäuren, Isononansäure und/oder 2-Ethylhexansäure.

Bei der Ausgangskomponente a4) handelt es sich um mehrwertige Alkohole wie beispielsweise Glycerin, Trimethylolpropan, Pentaerythrit und/oder Gemische derartiger mehrwertiger Alkohole. Besonders bevorzugt sind Trimethylolpropan und Glycerin bzw. Mischungen dieser beiden Triole.

Bei der Ausgangskomponente b) handelt es sich um difunktionelle Polyole, ausgewählt aus der Gruppe bestehend aus (i) Polycarbonatdiolen des Molekulargewichtsbereichs 400 bis 6000, (ii) Polyetherpolyolen des Molekulargewichtsbereiches 350 bis 3500 und (iii) Dimerfettalkoholen der bereits oben als mögliche Aufbaukomponente a2) genannten Art.

Geeignete Polycarbonatpolyole werden z.B. erhalten, indem Kohlensäurederivate, wie z.B. Diphenylcarbonat oder Phosgen mit Alkoholen, vorzugsweise Diolen, umgesetzt werden. Geeignete Diole sind z.B. bei Ausgangskomponente a2) beschrieben.

Geeignete Polyetherpolyole sind insbesondere die Ethoxylierungs- und/oder Propoxylierungsprodukte von Wasser oder von Diolen der bereits als Ausgangskomponente a2) beispielhaft genannten Art mit der Maßgabe, daß der Ethylenoxidgehalt, bezogen auf alle eingebauten Alkylenoxidgruppen, unter 30 Gew.-% liegt.

Ganz besonders bevorzugte Polyole b) sind difunktionelle Polycarbonatpolyole des Molekulargewichts 750 bis 4 000.

Bei der Ausgangskomponente c) handelt es sich um mindestens eine Hydroxycarbonsäure und/oder Aminocarbonsäure und/oder Aminosulfonsäure und/oder Hydroxysulfonsäure der z.B. in US-PS 3 479 310 genannten Art. Zu den bevorzugten Komponenten c) gehören 2,2-Bis-(hydroxymethyl)-alkanmonocarbonsäuren mit insgesamt 5 bis 8 Kohlenstoffatomen, d.h. Verbindungen der allgemeinen Formel 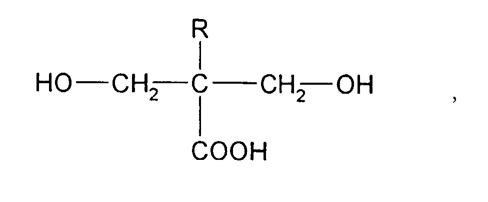 in welcher
R für einen Alkylrest mit 1 bis 4 Kohlenstoffatomen steht.
Ganz besonders bevorzugt als Komponente c) sind 2,2-Dimethylolpropionsäure und 2,2-Dimethylolbuttersäure.

Wie bereits oben angedeutet, ist es auch möglich, anstelle der freien Säure die entsprechenden Alkalisalze einzusetzen, vorausgesetzt, die Salze sind mit den übrigen Aufbaukomponenten ausreichend verträglich.

Bei der Ausgangskomponente d) handelt es sich um mindestens zwei Hydroxyl-und/oder Aminogruppen enthaltende Verbindungen des Molekulargewichts 60 bis 300. Geeignet sind z.B. Ethylenglykol, Propylenglykol, Neopentylglykol, Butandiol, Hexandiol, Cyclohexandimethanol, Diethylenglykol, Dipropylenglykol, Trimethylolpropan, 1,4-Cyclohexandiol, Glycerin, Pentaerythrit, Aminoethanol, Aminoisopropanol, N'N-Dimethyl-1,3-aminopropan und Gemische dieser und auch anderer entsprechender Verbindungen. Ebenfalls geeignet sind niedermolekulare Umsetzungsprodukte der genannten Verbindungen mit Ethylenoxid und/oder Propylenoxid und/oder ε-Caprolacton.

Bevorzugte Komponente d) sind niedermolekulare Diole und Triole des Molekulargewichts 90 bis 150, wie z.B. 1,4-Butandiol, 1,6-Hexandiol, Neopentylglykol, Diethylenglykol, Glycerin und/oder Trimethylolpropan.

Bei der Ausgangskomponente e) handelt es sich um nichtionisch hydrophile Polyethylenglykole, die ein oder zwei Hydroxylgruppen aufweisen. Vorzugsweise handelt es sich hierbei um 1- oder 2-wertige Polyetheralkohole des Molekulargewichtsbereichs 350 bis 2500, wie sie in an sich bekannter Weise durch Alkoxylierung von 1- oder 2-wertigen Alkoholen als Startermoleküle erhalten werden, wobei als Alkylenoxide Ethylenoxid oder Gemische aus Ethylenoxid mit bis zu 40 Gew.-%, bezogen auf das Gesamtgewicht der Alkylenoxide, an Propylenoxid zum Einsatz gelangen.

Bei der Ausgangskomponente f) handelt es sich vorzugsweise um lineare aliphatische Diisocyanate des Molekulargewichtsbereichs 168 bis 300 wie beispielsweise Hexamethylendiisocyanat, 1,11-Undecandiisocyanat oder 1,12-Dodecandiisocyanat. Als Ausgangskomponente f) ebenfalls, jedoch weniger bevorzugt geeignet sind Gemische derartiger linearer aliphatischer Diisocyanate mit anderen Diisocyanaten wie beispielsweise Isophorondiisocyanat, 2,4-Diisocyanatodoluol oder auch mit Lackpolyisocyanaten auf Basis von Hexamethylendiisocyanat der an sich bekannten Art mit einem maximalen Molekulargewicht von 1000. Die Ausgangskomponente f) besteht jedoch zumindest zu 50 Gew.-% aus linearen aliphatischen Diisocyanaten der eingangs erwähnten Art.

Geeignete Lösungsmittel zur Herstellung der Polyester-Polyurethan-Dispersionen sind z.B. N-Methylpyrrolidon, Methoxyhexanon, Diethylenglykoldimethylether, Methylethylketon, Methylisobutylketon, Aceton, Xylol, Toluol, Butylacetat, Methoxypropylacetat bzw. Gemische dieser oder anderer Lösemittel. Die verwendeten organischen Lösemittel können vor, während oder nach dem Dispergierschritt ganz oder teilweise, gegebenenfalls azeotrop und/oder durch Anlegen eines Vakuums bzw. eines verstärkten Inertgasstromes aus dem Reaktionsgemisch entfernt werden.

Geeignete Katalysatoren für die Urethanisierungsreaktion, d.h. die Umsetzung der Komponente a) bis f), können z.B. sein: Triethylamin, Zinn-II-octoat, Dibutylzinnoxid, Dibutylzinndilaurat und andere gebräuchliche Katalysatoren.

Geeignete Basen zur Neutralisation der zunächst eingebauten Säuregruppen sind beispielsweise Ammoniak, N-Methylmorpholin, Triethylamin, Dimethylethanolamin, Methyldiethanolamin, Morpholin, Dimethylisopropanolamin, 2-Amino-2-methyl-1-propanol bzw. Gemische dieser und anderer Neutralisationsmittel. Ebenfalls geeignet, jedoch weniger bevorzugt als Neutralisationsmittel sind Natriumhydroxid, Lithiumhydroxid und Kaliumhydroxid.

Bevorzugte Neutralisationsmittel sind Ammoniak, Dimethylethanolamin, Methyldiethanolamin und Dimethylisopropanolamin.

Zur Durchführung des Dispergierschrittes kann alternativ das Wasser-/Neutralisationsmittelgemisch zum Harz, das Harz zum Wasser-/Neutralisationsgemisch oder das Harz-/Neutralisationsmittelgemisch zum Wasser gegeben werden. Unter "Harz" ist hierbei entweder das lösungsmittelfrei hergestellte Polyester-Polyurethan oder seine Lösung in einem der beispielhaft genannten Hilfslösungsmittel zu verstehen. Der Dispergierschritt erfolgt im allgemeinen innerhalb des Temperaturbereichs von 20 bis 100, vorzugsweise 40 bis 100°C. Die Dispergierbarkeit der Polyester-Polyurethane in Wasser kann gewünschtenfalls durch Mitverwendung von externen Emulgatoren beim Dispergieren verbessert werden.

Die erfindungsgemäßen Polyester-Polyurethan-Dispersionen weisen im allgemeinen einen Gehalt an organischen Lösungsmitteln von unter 10, vorzugsweise unter 6 und besonders bevorzugt unter 4 Gew.-% auf.

Den erfindungsgemäßen Dispersionen können im Anschluß an ihre Herstellung zur Erzielung bestimmter Eigenschaften weitere organische Lösungsmittel, insbesondere alkoholische Lösungsmittel wie beispielsweise Ethanol, n-Butanol, n-Octanol, Butyldiglykol, Ethyldiglykol, Methyldiglykol oder Methoxypropanol zugesetzt werden.

Die erfindungsgemäßen Dispersionen stellen wäßrige Bindemittelkomponenten für Beschichtungsmittel auf Basis von in Wasser dispergierten Polyhydroxylverbindungen und Vernetzerharzen dar. Hierbei können die erfindungsgemäßen Dispersionen als alleinige Bindemittel oder aber auch in Abmischung mit wäßrigen Dispersionen anderer Bindemittel zum Einsatz gelangen. Die Polyolkomponente der erfindungsgemäßen Beschichtungsmittel besteht demzufolge, bezogen auf Feststoff, zu 25 bis 100 Gew.-% aus Polyester-Polyurethanen der erfindungsgemäßen Art und zu 0 bis 75 Gew.-% aus anderen, in Wasser dispergierbaren oder löslichen Bindemitteln. Als andere Bindemittel sind insbesondere an sich bekannte, in Wasser dispergierbare, gegebenenfalls Hydroxylgruppen aufweisende Polyesterharze, Polyacrylatharze oder Polyurethanharze, die sich bezüglich ihrer chemischen Zusammensetzung von den erfindungsgemäßen Polyester-Polyurethanen unterscheiden, zu verstehen. Bevorzugt sind dabei Polyurethanharze, wie sie z.B. im den, in der DE-OS 2 651 506 beschriebenen PUR-Dispersionen enthalten sind. Diese Polyurethanharze enthalten vorzugsweise keine Hydroxylgruppen, sind linear aufgebaut und haben ein aus der Stöchiometrie der zu ihrer Herstellung eingesetzten Ausgangsmaterialien berechenbares Molekulargewicht Mn (Zahlenmittel) von mindestens 15000. Sie sind anionisch und/oder nichtionisch-hydrophil modifiziert. Bevorzugte Komponente A) sind Dispersionen, die, bezogen auf Feststoff, 25 bis 80 Gew.-% an Polyester-Polyurethanen der erfindungsgemäßen Art und 75 bis 20 Gew.-% der bevorzugten Polyurethane enthalten.

Geeignete Vernetzerharze B) sind Aminoplastharze, gegebenenfalls hydrophil modifzierte Polyisocyanate mit blockierten Isocyanatgruppen und gegebenenfalls hydrophil modifizierte Polyisocyanate mit freien Isocyanatgruppen.

Geeignete Aminoplastharze sind beispielsweise wasserverdünnbare bzw. -dispergierbare Melamin- bzw. Harnstoff-Formaldehyd-Kondensationsprodukte, wie sie z.B. bei D.H. Solomon, The Chemistry of Orgnaic Filmformers, S. 235 ff, John Wiley & Sons, Inc., New York, 1967, beschrieben sind. Die Melaminharze können jedoch auch ganz oder teilweise durch andere vernetzende Aminoplaste, wie sie z.B. in "Methoden der organischen Chemie" (Houben-Weyl), Bd. 14/2 Teil 2, 4. Auflage, Georg Thierme Verlag, Stuttgart 1963, S. 319 ff, beschrieben sind, ersetzt werden.

Ebenfalls geeignete Vernetzerharze sind blockierte Polyisocyanate, beispielsweise auf Basis von Isophorondiisocyanat, Hexamethylendiisocyanate, 1,4-Diisocyanatcyclohexan, Dicyclhexylmethandiisocyanat, 1,3-Diisocyanatobenzol, 1,4-Diisocyanatobenzol, 2,4-Diisocyanato-1-methylbenzol, 1,3-Diisocyanato-2-methylbenzol, 1,3-Bisisocyanatomethylbenzol, 2,4-Bisisocyanatomethyl-1,5-dimethyl-benzol, Bis(4-isocyanatophenyl)-propan, Tris-(4-isocyanatophenyl)-methan, Trimethyl-1,6-diisocyanatohexan oder blockierte "Lackpolyisocyanate" wie Biuretgruppen aufweisende Polyisocyanate auf Basis von 1,6-Diisocyanatohexan, Isocyanuratgruppen aufweisende Polyisocyanate auf Basis von 1,6-Diisocyanatohexan oder Urethangruppen aufweisende Lackpolyisocyanate auf Basis von 2,4- und/oder 2,6-Diisocyanatotoluol oder Isophorondiisocyanat einerseits und niedermolekularen Polyhydroxylverbindungen wie Trimethylolpropan, den isomeren Propandiolen oder Butandiolen oder beliebigen Gemischen derartiger Polyhydroxylverbindungen andererseits, jeweils mit blockierten Isocyanatgruppen.

Ebenfalls geeignet sind z.B. durch Salzgruppen oder Polyetherstrukturen hydrophilierte, blockierte Polyisocyanate.

Geeignete Blockierungsmittel für diese Polyisocyanate sind beispielsweise einwertige Alkohole wie Methanol, Ethanol, Butanol, Hexanol, Benzylalkohol, Oxime wie Methylethylketoxim, Lactame wie ε-Caprolactam, Phenole oder CH-acide Verbindungen wie z.B. Diethylmalonat.

Als freie Isocyanatgruppen enthaltende Polyisocyanatvernetzer B) sind beispielsweise organische Polyisocyanate mit aliphatisch, cycloaliphatisch, araliphatisch und/oder aromatisch gebundenen, freien Isocyanatgruppen, die bei Raumtemperatur flüssig sind, geeignet. Solche Polyisocyanatvernetzer B) weisen im allgemeinen bei 23°C eine Viskosität von 50 bis 10 000, vorzugsweise von 50 bis 1 500 mPa.s auf.

Falls erforderlich, können die Polyisocyanate in Abmischung mit geringen Mengen an inerten Lösungsmitteln zum Einsatz gelangen, um die Viskosität auf einen Wert innerhalb der genannten Bereiche abzusenken.

Sehr gut geeignet sind beispielsweise "Lackpolyisocyanate" auf Basis von Hexamethylendiisocyanat oder von 1-Isocyanato-3,3,5-trimethyl-5-isocyanatomethylcyclohexan (IPDI) und/oder Dicyclohexylmethandiisocyanat. Unter "Lackpolyisocyanaten" auf Basis dieser Diisocyanate sind die an sich bekannten Biuret-, Urethan-, Allophanat-, Uretdion- und/oder Isocyanuratgruppen aufweisenden Derivate dieser Diisocyanate zu verstehen, die im Anschluß an ihre Herstellung in bekannter Weise, vorzugsweise durch Destillation von überschüssigem Ausgangsdiisocyanat bis auf einen Restgehalt von weniger 0,5 Gew.-% befreit worden sind. Zu den bevorzugten, erfindungsgemäß zu verwendenden, aliphatischen Polyisocyanaten gehören den obengenannten Kriterien entsprechende, Biuretgruppen aufweisende Polyisocyanate auf Basis von Hexamethylendiisocyanat, wie sie beispielsweise nach den Verfahren der US-Patentschriften 3 124 605, 338 010, 3 903 126, 3 903 127 oder 3 976 622 erhalten werden können und die aus Gemischen von N,N',N"-Tris-(6-isocyanatohexyl)-biuret mit untergeordneten Mengen seiner höheren Homologen bestehen, sowie die den genannten Kriterien entsprechenden cyclischen Trimerisate von Hexamethylendiisocyanat, wie sie gemäß US-PS 4 324 879 erhalten werden können und die im wesentlichen aus N,N',N"-Tris-(6-isocyanatohexyl)-isocyanurat im Gemisch mit untergeordneten Mengen an seinen höheren Homologen bestehen.

Bei den erfindungsgemäß ebenfalls geeigneten, jedoch weniger bevorzugten aromatischen Polyisocyanaten handelt es sich insbesondere um "Lackpolyisocyanate" auf Basis von 2,4-Diisocyanatotoluol oder dessen technischen Gemischen mit 2,6-Diisocyanatotoluol oder auf Basis von 4,4'-Diisocyanatodiphenylmethan bzw. dessen Gemischen mit seinen Isomeren und/oder höheren Homologen.

Ebenfalls geeignete Polyisocyanatvernetzer sind solche, die durch den Einbau von Polyether- und/oder Salzgruppen hydrophiliert sind, wie sie z.B. in DE-OS 4 136 618 oder US 4 663 377 beschrieben sind.

Bevorzugte Vernetzerharze sind die vorstehend beschriebenen Polyisocyanatvernetzer mit freien Isocyanatgruppen, insbesondere hydrophilierte Vernetzer auf dieser Basis. Besonders bevorzugt handelt es sich bei der Polyisocyanatkomponente B) um solche Polyisocyanate oder Polyisocyanatgemische mit ausschließlich aliphatisch und/oder cycloaliphatisch gebundenen Isocyanatgruppen einer zwischen 2,2 und 5,0 liegenden (mittleren) NCO-Funktionalität und einer Viskosität bei 23°C von 50 bis 1 500 mPa.s.

In den erfindungsgemäßen Beschichtungsmitteln liegen im allgemeinen, jeweils bezogen auf Feststoff, 50 bis 95, vorzugsweise 65 bis 90 Gew.-% der Hydroxylgruppen aufweisenden Komponente A) in Kombination mit 5 bis 50, vorzugsweise 10 bis 35 Gew.-% Vernetzer B) vor. Der Festkörpergehalt der Beschichtungsmittel liegt im allgemeinen bei 35 bis 70 Gew.-%.

Die erfindungsgemäßen Beschichtungsmittel können selbstverständlich die an sich bekannten Hilfs- und Zusatzmittel der Lacktechnologie enthalten. Hierzu gehören beispielsweise Entschäumungsmittel, Verdickungsmittel, Verlaufshilfsmittel, Pigmente, Mattierungsmittel, Dispergierhilfsmittel für die Pigmentverteilung u. dgl..

Die erfindungsgemäßen Beschichtungsmittel, die Melaminharze oder blockierte Polyisocyanate als Vernetzerharze enthalten bzw. Beschichtungsmittel oder Dichtmassen auf Basis derartiger Bindemittelkombinationen, stellen in der Hitze vernetzbare Einkomponenten-Systeme dar, die bei Raumtemperatur lagerfähig sind. Entsprechende Systeme, die als Vernetzer Polyisocyanate mit freien Isocyanatgruppen enthalten, stellen Zweikomponenten-Systeme dar, die durch Abmischung der Einzelkomponenten erhalten werden und bei Raumtemperatur eine nur begrenzte Topfzeit aufweisen.

Zu den bevorzugten Anwendungsgebieten für die erfindungsgemäßen Polyester-Polyurethan-Dispersionen gehört ihre Verwendung als Bindemittelkomponente in elastischen Lacken, Beschichtungs- und Dichtmassen, insbesondere in Softfeellacken, z.B. für die Kunststoffbeschichtung und Automobilinnenlackierung. Die erfindungsgemäßen Polyester-Polyurethan-Dispersionen eignen sich jedoch auch als Bindemittelkomponente für wäßrige Kunststoff-, Folien-, Metall- oder Holzlacke sowie als Bindemittelkomponente zur Beschichtung von mineralischen Substraten.

In den nachfolgenden Beispielen beziehen sich alle Prozentangaben auf das Gewicht. Die pH-Werte wurden gemäß DIN 53 785 nach Verdünnen mit destilliertem Wasser auf einen Festkörpergehalt von 10 Gew.-% bestimmt.

### Beispiele 1 bis 11:

Herstellung der Polyester-Polyurethan-Dispersionen 1 bis 11

### Beispiel 1

a) In ein 5-1-Reaktionsgefäß mit Rühr-, Kühl- und Heizvorrichtung und Wasserabscheider werden 514 g Ethylenglykol, 865 g Butandiol-1,4, 555 g Diethylenglykol und 2741g Adipinsäure eingewogen und unter Durchleiten von Stickstoff langsam auf 220°C erhitzt. Dabei darf die Kopftemperatur 102°C nicht überschreiten. Es wird solange unter Wasserabspaltung kondensiert, bis der Polyester eine Gesamtsäurezahl von 3,0 aufweist. Die OH-Zahl beträgt dann 95.
b) In ein 5-1-Reaktionsgefäß mit Rühr-, Kühl- und Heizvorrichtung werden 815 g des Polyesters 1a), 815 g ®Desmophen C 200 (difunktionelles, flüssiges, aliphatisches Polycarbonat, Hydroxylgehalt ca. 1,7%, Bayer AG), 70 g Trimethylolpropan (TMP), 80 g Dimethylolpropionsäure (DMPS), 2,5 g Zinn(II)octoat und 83 g N-Methylpyrrolidon (NMP) unter Stickstoff eingewogen, auf 130°C aufgeheizt und homogenisiert. Anschließend wird auf 100°C abgekühlt, 220 g Hexamethylendiisocyanat (HDI) zugegeben und solange bei 120°C gerührt, bis keine NCO-Gruppe mehr nachweisbar sind. Nach Abkühlen auf 90 bis 100°C werden unter Rühren 44,2 g Dimethylethanolamin (DMEA) und 1770 g Wasser zugegeben. Man erhält die Polyester-Polyurethan-Dispersion 1), welche einen Festkörpergehalt von 50,5 %, eine Säurezahl von ca. 18 (100 %ig), einen pH-Wert von ca. 7,2 (10 %ig), einen Neutralisationsgrad von ca. 90 %, einen Hydroxylgruppengehalt von ca. 2,0 % (100 %ig) und einen Gehalt an organischen Lösemitteln von ca. 2,1 % aufweist.

### Beispiel 2

a) In ein 5-1-Reaktionsgefäß mit Rühr-, Kühl- und Heizvorrichtung und Wasserabscheider werden 1939 g Adipinsäure, 827 g ®Pripol 1025® (hydrierte Dimerfettsäure, Säurezahl ca. 195 mg KOH/g, Unichema), 366 g Ethylenglykol, 930 g Butandiol-1,4 und 469 g Diethylenglykol eingewogen und unter Durchleiten von Stickstoff langsam auf 220°C erhitzt. Es wird solange unter Wasserabspaltung kondensiert, bis der Polyester eine Gesamtsäurezahl von 4,5 aufweist. Die OH-Zahl beträgt dann 156.
b) In einem 2-1-Reaktionsgefäß mit Rühr-, Kühl- und Heizvorrichtung werden 607,5 g des Polyesters 2a), 200 g ®Desmophen C 200, 40 g DMPS, 20 g TMP, 1,3 g Zinn(II)octoat und 41,7 g NMP unter Stickstoff eingewogen, auf 130°C aufgeheizt und homogenisiert. Anschließend wird auf 100°C abgekühlt, 132,5 g HDI zugegeben und solange unter Stickstoff gerührt, bis keine NCO-Gruppen mehr nachweisbar sind. Nach Abkühlen auf ca. 90°C werden unter Rühren 27 g DMEA und 935 g Wasser zugegeben. Man erhält die Polyester-Polyurethan-Dispersion 2), welche einen Festkörpergehalt von 47,6 %, eine Säurezahl von ca. 19 (100 %ig), einen pH-Wert von ca. 7,9 (10 %ig), einen Neutralisationsgrad von 110 %, einen Hydroxylgruppengehalt von ca. 2,2 % (100 %ig) und einen Gehalt an organischen Lösemitteln von ca. 2,1 % aufweist.

### Beispiel 3

In einem 2-1-Reaktionsgefäß mit Rühr-, Kühl- und Heizvorrichtung werden unter Stickstoff 855 g des Polyesters 1a), 55 g eines difunktionellen, kristallinen Poly-1,6-hexandiolcarbonats der OH-Zahl 56, 10 g Glycerin, 40 g DMPS, 1,3 g Zinn(II)octoat und 41,7 g NMP eingewogen und bei 130°C homogenisiert. Nach dem Abkühlen auf 100°C werden 108 g HDI auf einmal zugegeben und solange gerührt, bis keine NCO-Gruppen mehr nachweisbar sind. Nach Abkühlen auf 90°C werden 22,1 DMEA und 885 g Wasser zugegeben. Man erhält die Polyester-Polyurethan-Dispersion 3), welche einen Festkörpergehalt von 49,8 %, eine Säurezahl von ca. 20 (100 %ig), einen pH-Wert von ca. 7,2 (10 %ig), einen Neutralisationsgrad von 90 %, einen Hydroxylgruppengehalt von 1,3 % (100 %ig) und einen Gehalt an organischen Lösemitteln von ca. 2,1 % aufweist.

### Beispiel 4

a) In einem 5-1-Reaktionsgefäß mit Rühr-, Kühl- und Heizvorrichtung und Wasserabscheider werden 431 g Phthalsäureanhydrid (PSA), 1703 g Adipinsäure, 1720 g Hexandiol-1,6 und 618 g Diethylenglykol eingewogen und unter Durchleiten von Stickstoff langsam auf 220°C aufgeheizt. Es wird solange unter Wasserabspaltung kondensiert, bis der Polyester eine Gesamtsäurezahl von 2,8 aufweist. Die OH-Zahl beträgt dann 161.
b) In einem 2-1-Reaktionsgefäß mit Rühr-, Kühl- und Heizvorrichtung werden 393,7 g Polyester 4a), 393,8 g ®Desmophen C 200, 40 g DMPS, 20 g TMP, 1,3 g Zinn(II)octoat und 41,7 g NMP unter Stickstoff eingewogen, auf 130°C erwärmt und homogenisiert. Nach dem Abkühlen auf 100°C werden 152,5 g Hexamethylendiisocyanat zugegeben und solange bei 120°C gerührt, bis keine NCO-Gruppen mehr nachgewiesen werden können. Anschließend wird auf 90°C abgekühlt und 17,2 g DMEA sowie 985 g Wasser zugegeben. Man erhält die Polyester-Polyurethan-Dispersion 4), welche einen Festkörpergehalt von 47,1 %, eine Säurezahl von ca. 18 (100 %ig), einen Neutralisationsgrad von 70 %, einen Hydroxylgruppengehalt von ca. 1,2 % (100 %ig) und einen Gehalt an organischen Lösemitteln von ca. 2,0 % aufweist.

### Beispiel 5

a) In ein 5-1-Reaktionsgefäß mit Rühr-, Kühl- und Heizvorrichtung und Wasserabscheider werden 530 g Ethylenglykol, 891 g Butandiol-1,4, 573 g Diethylenglykol und 2662 g Adipinsäure eingewogen und unter Durchleiten von Stickstoff langsam auf 220°C erhitzt. Es wird solange unter Wasserabscheidung kondensiert, bis der Polyester eine Gesamtsäurezahl von 2,8 aufweist. Die OH-Zahl beträgt dann 147.
b) In ein 2-1-Reaktionsgefäß mit Rühr-, Kühl- und Heizvorrichtung werden unter Stickstoff 570 g Polyester 5a), 200 g ®Pripol 2033 (Dimerfettalkohol), Hydroxylzahl ca. 200 mg KOH/g, Unichema), 40 g DMPS, 20 g TMP, 1,3 g Zinn(II)octoat und 41,7 g NMP eingewogen, auf 130°C aufgeheizt und homogenisiert. Nach dem Abkühlen auf 100°C wird eine Mischung aus 130 g HDI und 40 g Isophorondiisocyanat auf einmal zugegeben und bei 120°C solange gerührt, bis keine NCO-Gruppe mehr nachweisbar sind. Nach Abkühlen auf 90°C werden 24,8 g DMEA, 20 g Butylglykol und 960 g Wasser zugegeben. Man erhält die Polyester-Polyurethan-Dispersion 5), welche einen Festkörpergehalt von 45,9 %, eine Säurezahl von ca. 20 (100 %ig), einen pH-Wert von ca. 7,8, einen Neutralisationsgrad von ca. 100 %, einen Hydroxylgruppengehalt von ca. 2,3 % (100 %ig) und einen Gehalt an organischen Lösemitteln von ca. 3,0 % aufweist.

### Beispiel 6

a) In ein 5-1-Reaktionsgefäß mit Rühr-, Kühl- und Heizvorrichtung und Wasserabscheider werden 598 g Isophthalsäure, 1590 g Adipinsäure, 1013 g ®Pripol 2033, 50 g ®Pripol 1025, 420 g Diethylenglykol und 894 g Ethylenglykol eingewogen und unter Durchleiten von Stickstoff langsam auf 220°C aufgeheizt. Es wird solange unter Wasserabscheidung kondensiert, bis der Polyester eine Gesamtsäurezahl von 2,6 aufweist. Die OH-Zahl beträgt dann 148.
b) In ein 2-1-Reaktionsgefäß mit Rühr-, Kühl- und Heizvorrichtung werden unter Stickstoff 590 g des Polyesters 6a), 200 g ®Desmophen C 200, 40 g DMPS, 20 g TMP, 1,3 g Zinn(II)octoat und 41,7 g NMP eingewogen, auf 130°C erwärmt und homogenisiert. Nach Abkühlen auf 100°C werden 150 g HDI zugegeben und bei 120°C solange gerührt, bis keine NCO-Gruppen mehr nachweisbar sind. Nach Abkühlen auf 90°C werden dann 24,4 g DMEA und 985 g Wasser zugegeben. Man erhält die Polyester-Polyurethan-Dispersion 6), welche einen Festkörpergehalt von 45,9 %, eine Säurezahl von ca. 20 (100 %ig), einen pH-Wert von ca. 7,8, einen Neutralisationsgrad von ca. 100 %, einen Hydroxylgruppengehalt von ca. 1,7 % (100 %ig) und einen Gehalt an organischen Lösemitteln von ca. 1,9 % aufweist.

### Beispiel 7

a) In ein 5-1-Reaktionsgefäß mit Rühr-, Kühl-, Heizvorrichtung und Wasserabscheider werden 531 g Ethylenglykol, 709 g Butandiol-1,4, 573 g Diethylenglykol, 2663 g Adipinsäure und 181 g TMP eingewogen und unter Durchleiten von Stickstoff langsam auf 220°C aufgeheizt. Es wird solange unter Wasserabspaltung erhitzt, bis der Polyester eine Gesamtsäurezahl von 3,3 aufweist. Die OH-Zahl beträgt dann 149.
b) 597,5 g Polyester 7a), 200 g ®Desmophen C 200, 40 g DMPS, 20 g TMP, 1,3 g Zinn(II)octoat und 41,7 g NMP werden in ein 2-1-Reaktionsgefäß mit Rühr-, Kühl- und Heizvorrichtung unter Stickstoff eingewogen, auf 130°C erwärmt und homogenisiert. Nach Abkühlen auf 100°C werden 142,5 g HDI zugegeben, auf 120°C erwärmt und solange gerührt, bis keine NCO-Gruppen mehr nachweisbar sind. Nach Abkühlen auf 90°C werden 17,2 g DMEA und 820 g Wasser zugegeben. Man erhält die Polyester-Polyurethan-Dispersion 7), welche einen Festkörpergehalt von 52,0 %, eine Säurezahl von ca. 20 (100 %ig), einen pH-Wert von ca. 6,7 (10 %ig), einen Neutralisationsgrad von ca. 70 %, einen Hydroxylgruppengehalt von ca. 1,9 % (100 %ig) und einen Gehalt an organischen Lösemitteln von ca. 2,0 % aufweist.

### Beispiel 8

a) In ein 5-1-Reaktionsgefäß mit Rühr-, Kühl- und Heizvorrichtung und Wasserabscheider werden 343 g Diethylenglykol, 1443 g Adipinsäure, 907 g ®Pripol 1025 und 1721 g Hexandiol eingewogen und unter Durchleiten von Stickstoff langsam auf 220°C aufgeheizt. Es wird solange unter Wasserabspaltung erhitzt, bis der Polyester eine Gesamtsäurezahl von 2,6 hat. Die OH-Zahl beträgt dann 181.
b) In ein 2-1-Reaktionsgefäß mit Rühr-, Kühl- und Heizvorrichtung werden unter Stickstoff 590 g Polyester 8a), 200 g Desmophen C 200, 40 g DMPS, 20 g TMP, 1,3 g Zinn(II)octoat und 41,7 g NMP eingewogen, auf 130°C erwärmt und homogenisiert. Nach Abkühlen auf 100°C werden 150 g HDI zugegeben und solange bei 120°C gerührt, bis keine NCO-Gruppen mehr vorhanden sind. Nach Abkühlen auf 90°C werden 18,2 g Dimethylisopropanolamin und 885 g Wasser zugegeben. Man erhält die Polyester-Polyurethan-Dispersion 8), welche einen Festkörpergehalt von 49,2 %, eine Säurezahl von ca. 19 (100 %ig), einen Neutralisationsgrad von ca. 70 %, einen pH-Wert von ca. 7,2 (10 %ig), einen Hydroxylgruppengehalt von ca. 2,3 (100 %ig) und einen Gehalt an organischen Lösemitteln von ca. 2 % aufweist.

### Beispiel 9

a) In ein 5-1-Reaktionsgefäß mit Rühr-, Kühl-, Heizvorrichtung und Wasserabscheider werden 308 g Ethylenglykol, 922 g Butandiol, 395 g Diethylenglykol, 1427 g Adipinsäure und 1390 g ®Pripol 1025 eingewogen und unter Durchleiten von Stickstoff langsam auf 220°C aufgeheizt. Unter Wasserabspaltung wird solange kondensiert, bis die Gesamtsäurezahl 5 beträgt. Die OH-Zahl ist dann 180.
b) In ein 2-1-Reaktionsgefäß mit Rühr-, Kühl- und Heizvorrichtung werden 585 g Polyester 9a), 100 g Polyether 3600 Z (difunktioneller Polyether, OH-Zahl 56, Bayer AG), 60 g ®Priplast 3193 (difunktioneller Diester auf Basis von Dimerfettsäure und Ethylenglykol, OH-Zahl ca. 115, Unichema), 30 g ®Desmophen V 531 (verzweigter Polyether, OH-Zahl 550, Bayer AG), 55 g DMPS, 1,3 g Zinn(II)octoat und 41,7 g NMP unter Stickstoff eingewogen, auf 120°C aufgeheizt und homogenisiert. Nach Abkühlen auf 100°C werden 185 g HDI zugegeben und solange gerührt, bis keine NCO-Gruppen mehr vorhanden sind. Nach Abkühlen auf 90°C werden 37,2 g DMEA und 885 g Wasser zugegeben. Man erhält die Polyester-Polyurethan-Dispersion 9), welche einen Festkörpergehalt von 49,8 %, eine Säurezahl von ca. 26 (100 %ig), einen Neutralisationsgrad von ca. 100 %, einen pH-Wert von ca. 8,0 (10 %ig), einen Hydroxylgruppengehalt von ca. 1,9 % (100 %ig) und einen Gehalt an organischen Lösemitteln von ca. 2,0 % aufweist.

### Beispiel 10

In ein 2-1-Reaktionsgefäß mit Rühr-, Kühl- und Heizvorrichtung werden 520 g Polyester 5a), 200 g ®Desmophen C 200, 50 g DMPS, 40 g TMP, 1,3 g Zinn(II)-octoat und 41,7 g NMP unter Stickstoff eingewogen, auf 130°C erwärmt und homogenisiert. Anschließend wird auf 100°C abgekühlt, 190 g Hexamethylendiisocyanat zugegeben und bei 130°C solange gerührt, bis keine NCO-Gruppen mehr nachgewiesen werden können. Nach Abkühlen auf 90°C werden 21,5 g Dimethylethanolamin und 935 g Wasser zugegeben. Man erhält die Polyester-Polyurethan-Dispersion 10), welche einen Festkörpergehalt von 48,5 %, eine Säurezahl von ca. 24 (100 %ig), einen pH-Wert von ca. 7,1 (10 %ig), einen Neutralisationsgrad von 70 %, einen Hydroxylgruppengehalt von ca. 1,4 % (100 %ig) und einen Gehalt an organischen Lösemitteln von ca. 2,0 % aufweist.

### Beispiel 11

In ein 2-1-Reaktionsgefäß mit Rühr-, Kühl- und Heizvorrichtung werden 620 g Polyester 5a), 200 g ®Desmophen C 200, 40 g DMPS, 20 g TMP, 1,3 g Zinn(II)-octoat und 41,7 g NMP unter Stickstoff eingewogen, auf 130°C erwärmt und homogenisiert. Anschließend wird auf 100°C abgekühlt, 100 g HDI und 20 g eines handelsüblichen HDI-Trimerisats (®Desmodur N 3300, Bayer AG) zugegeben und bei 130°C solange gerührt, bis keine NCO-Gruppen mehr nachgewiesen werden können. Nach Abkühlen auf 90°C werden 24,6 g DMEA und 885 g Wasser zugegeben. Man erhält die Polyester-Polyurethan-Dispersion 11), welche einen Festkörpergehalt von 49,4 %, eine Säurezahl von ca. 20 (100 %ig), einen pH-Wert von 7,8 (10 %ig), einen Neutralisationsgrad von ca. 100 %, einen Hydroxylgruppengehalt von ca. 2,5 % (100 %ig) und einen Gehalt an organischen Lösemitteln von ca. 2 % aufweist.

### Anwendungsbeispiele

Ausgangsmaterialien:

### Vernetzer 1:

Hydrophiliertes, Isocyanatgruppen aufweisendes Trimerisat von 1,6-Diisocyanatohexan, 80 %ig in Methoxypropylacetat, NCO-Äquivalentgewicht der Lösung: 305 (®Bayhydur-VP LS 2032, Bayer AG).

### Vernetzer 2:

Aminovernetzerharz, ®Cymel 327 (American Cyanamid), Lieferform.

### Vernetzer 3:

Blockierter wäßriger Polyisocyanatvernetzer, ®Bayhydur-VP 2050 (Bayer AG), Lieferform.

### PUR-Dispersion 1)

Aliphatische, anionisch hydrophilierte PUR-Dispersion, Festkörpergehalt: 40 %, hergestellt gemäß DE-OS 2 651 506.

Handelsübliche Mattierungsmittel:
®Silitin Z 86 (Hoffmann & Söhne KG, Neuburg)
®Pergopak M 3 (Martinswerk, Bergheim)

Handelsübliche Füllstoffe:
Talkum
Spezial schwarz IV

Handelsübliche Pigmente:
®Bayferrox 318 M (Bayer AG)
®Bayertitan R-KB 4 (Bayer AG)

Handelsüblicher Entschäumer:
Entschäumer DNE (Bayer AG)

Handelsübliches Benetzungsmittel:
®Tego Wet KL 245 (Lieferant: Tego-Chemie)

### Anwendungsbeispiel 1)

191,1 g Polyester-Polyurethan-Dispersion 1), 471,7 g PUR-Dispersion 1), 2,1 g Entschäumer DNE, 3,4 g Tego Wet KL 245, 33,4 g Silitin Z 86, 50,2 g Pergopak M 3, 133,6 g Bayferrox 318 M und 46,2 g destilliertes Wasser werden zusammen angerieben.

Anschließend werden 68,3 g Vernetzer 1) zugegeben. Das NCO:OH-Verhältnis beträgt 1,5:1). Man erhält eine Bindemittelkombination mit einer Verarbeitungszeit von ca. 5 Stunden. Bei ca. 55 % rel. Luftfeuchte und 23°C wird der Lackfilm auf Glas- bzw. Kunststoffplatten appliziert, 10 Minuten bei Raumtemperatur und dann 45 Minuten bei 80°C gehärtet. Die Trockenfilmstärke beträgt ca. 50 µm.

Die Prüfung der lacktechnischen Eigenschaften erfolgt nach Alterung der Filme (48 h Raumtemperatur). Folgende Eigenschaften wurden gefunden:

| | |
|---|---|
| Filmoptik¹⁾ | in Ordnung |
| Pendelhärte (DIN 53157) | 43 sec. |
| Softfeeleffekt (0 - 5)²⁾ | 1 - 2 |
| Haftung auf ®Bayblend⁶⁾ | |
| - Gitterschnitt (DIN 53230) (0 - 5)³ | 1 - 2 |
| - Kreuzschnitt (0 - 5)³ | 1 |
| Anlösbarkeit (0 - 5)⁴⁾ | |
| Superbenzin | 1 |
| Methoxypropylacetat | 1 |
| Xylol | 4 |
| Ethanol | 0 |
| Wasser | 0 |
| Crockmeter-Test⁵⁾ | 100 Hübe o.B. |

| | |
|---|---|
| ¹⁾ Beurteilung von Filmhomogenität, Einheitlichkeit des Mattierungsgrads, Pigmentbenetzung | |
| ²⁾ Wert 0 = sehr guter Softfeeleffekt, Wert 2 = guter Softfeeleffekt, Wert 5 = kein Softfeeleffekt. | |
| ³⁾ Wert 0 = ausgezeichnete Haftung, Wert 2 = gute Haftung, Wert 5 = sehr schlechte Haftung. | |
| ⁴⁾ Die Anlösbarkeit wurde durch Belastung für 1 Minute mit einem Lösemittel enthaltendem Wattebausch durchgeführt. Wert 0 = ohne Befund, Wert 5 = abgelöst. | |
| ⁵⁾ Wischtest mit ethanolgetränktem Stempel. | |
| ⁶⁾ Polycarbonat/ABS-Blend. | |

### Anwendungsbeispiel 2)

276,6 g Polyester-Polyurethan-Dispersion 11), 341,3 g PUR-Dispersion 1), 2,2 g Entschäumer DNE, 3,5 g Tego Wet KL 245, 34,7 g Silitin Z 86, 52,2 g Pergopak M 3, 138,7 g Bayferrox 318 M und 51,9 g destilliertes Wasser werden zusammen angerieben und anschließend mit 98,9 g Vernetzer 1) abgemischt. Das NCO:OH-Verhältnis beträgt 1,5:1).

Nach Applikation und Aushärtung wie in Anwendungsbeispiel 1 beschrieben, erhält man folgende Prüfergebnisse:

| | |
|---|---|
| Filmoptik | in Ordnung |
| Pendelhärte (DIN 53157) | 49 sec. |
| Softfeeleffekt | 2 |
| Haftung auf ®Bayblend | |
| - Gitterschnitt (DIN 53230) | 2 |
| - Kreuzschnitt | 1 |
| Anlösbarkeit | |
| Superbenzin | 1 |
| Methoxypropylacetat | 1 |
| Xylol | 2 |
| Ethanol | 0 |
| Wasser | 0 |
| Crockmeter-Test | 100 Hübe o.B. |

### Anwendungsbeispiele 3 bis 11)

Wie in Anwendungsbeispiel 2 beschrieben, wurden in den Anwendungsbeispielen 3 bis 11 die unten aufgeführten PES-PUR-Dispersionen mit PUR-Dispersion 1), den in Beispiel 2 genannten Hilfs- und Zusatzmitteln, sowie Vernetzer 1) abgemischt. Die Mengenverhältnisse der einzelnen Komponenten (jeweils bezogen auf Feststoff) entsprechen den Angaben des Anwendungsbeispiels 2. Dabei wurden folgende Ergebnisse erhalten:

| Anwendungsbeispiel | PES-PUR Dispersion | Softfeeleffekt | Haftung Gitterschnitt | Lösemittelbeständigkeit* |
|---|---|---|---|---|
| 3) | 3) | 2 | 2 | 1/2/1/3/0 |
| 4) | 1) | 2 | 1-2 | 1/1/1/0/0 |
| 5) | 2) | 2 | 2 | 2/1/1/0/0 |
| 6) | 4) | 2 | 2 | 2/1/1/1/0 |
| 7) | 5) | 1-2 | 3 | 1/1/1/0/0 |
| 8) | 6) | 3 | 2-3 | 1/1/1/1/0 |
| 9) | 7) | 2-3 | 2 | 2/1/1/0/0 |
| 10) | 8) | 2-3 | 2 | 1/2/2/1/0 |
| 11) | 9) | 3 | 3 | 2/1/2/1/0 |

| | | | | |
|---|---|---|---|---|
| * Werte für Superbenzin, Methoxypropylacetat, Xylol, Ethanol, Wasser. | | | | |

### Anwendungsbeispiel 12)

351 Polyester-Polyurethan-Dispersion 1), 228 g PUR-Dispersion 1), 2 g Entschäumer DNE, 3 g Tego Wet KL 245, 35 g Silitin Z 86, 52 g Pergopak M 3, 140 g Bayferrox 318 M und 87 g dest. Wasser werden zusammen angerieben und dann mit 102 g Vernetzer 1) homogen vermischt. Das NCO/OH-Verhältnis beträgt 1,5:1. Die Bindemittelkombination wird wie in Anwendungsbeispiel 1) beschrieben, appliziert und ausgehärtet.

| | |
|---|---|
| Filmoptik | in Ordnung |
| Pendelhärte (DIN 53157) | 43 sec. |
| Haftung auf ®Bayblend | |
| - Gitterschnitt (DIN 53230) | 1 |
| - Kreuzschnitt | 1 - 2 |
| Haftung auf ®Bayflex (PUR-RIM) | |
| - Gitterschnitt | 1 |
| - Kreuzschnitt | 1 - 2 |
| Anlösbarkeit | |
| Superbenzin | 1 - 2 |
| Methoxypropylacetat | 1 |
| Xylol | 0 - 1 |
| Ethanol | 0 |
| Wasser | 0 |
| Crockmeter-Test | 80 Hübe o.B. |

### Anwendungsbeispiel 13)

a) 150 g Polyester-Polyurethan-Dispersion 10) und 141 g Vernetzer 3) werden vermischt, mit Wasser auf eine Viskosität von ca. 30 sec. (DIN 4 mm Auslaufbecher) eingestellt, bei Raumtemperatur auf Glasplatten bzw. Stahlbleche appliziert und nach 10 Minuten Ablüftzeit bei Raumtemperatur für 30 Minuten bei 160°C ausgehärtet. Man erhält einen klaren, vernetzten Film (Trockenfilmstärke ca. 45 µm) mit sehr hoher Elastizität (Erichsentiefung nach DIN 53156 > 10 mm) und guter Lösemittelbeständigkeit (Methylethylketon-Wischtest: 200 Hübe ohne Befund).
b) 150 g Polyester-Polyurethan-Dispersion 10) und 26 g Vernetzer 2) werden vermischt, mit Wasser auf eine Viskosität von ca. 30 sec. (DIN 4 mm Auslaufbecher) eingestellt und wie oben beschrieben, appliziert und eingebrannt. Man erhält einen klaren Film mit sehr hoher Elastizität (Erichsentiefung 10 mm) und guter Lösemittelbeständigkeit (Methylethylketon-Wischtest: 200 Hübe ohne Befund).

### Anwendungsbeispiel 14)

342 g Polyester-Polyurethan-Dispersion 1), 2 g Entschäumer DNE, 3 g Bayertitan R-KB 4, 104 g Talkum AT 1, 209 g Spezialschwarz IV und 241 g destilliertes Wasser werden zusammen angerieben und dann mit 99 g Vernetzer 1) homogen vermischt. Die so hergestellte wäßrige 2-Komponenten-Grundierung für Kunststoffe wird wie in Anwendungsbeispiel 2)

## Patentansprüche

1. Wäßrige Dispersionen von Polyester-Polyurethanen mit einer Säurezahl von 5 bis 60 mg KOH/g Polyester-Polyurethan-Feststoff, einem Gehalt an Hydroxylgruppen von 0,25 bis 6,5 Gew.-% und an Urethangruppen (berechnet als -NH-CO-O-) von 2 bis 25 Gew.-%, jeweils bezogen auf Polyester-Polyurethan-Feststoff, dadurch gekennzeichnet, daß die Polyurethane, gegebenenfalls zumindest teilweise mit Basen neutralisierte, Umsetzungsprodukte darstellen von
a) insgesamt 15 bis 90 Gew.-% mindestens eines linearen Polyesterpolyols des Molekulargewichtsbereichs 500 bis 4000, wobei als Komponente a) Estergruppen aufweisende Polyole der auch als Komponente b) in Betracht kommenden Art ausgeschlossen sind,
b) insgesamt 4 bis 75 Gew.-% mindestens eines weiteren linearen Polyols, ausgewählt aus der Gruppe bestehend aus i) Hydroxylgruppen aufweisenden Polycarbonaten des Molekulargewichtsbereichs 400 bis 6 000, ii) Hydroxylgruppen aufweisenden Polyetherpolyolen des Molekulargewichtsbereichs 350 bis 3 500 mit weniger als 30 Gew.-% an Ethylenoxideinheiten, bezogen auf alle in Form von Polyetherketten vorliegenden Alkylenoxideinheiten und iii) Estergruppen aufweisenden, durch Hydrierung der Carboxylgruppen zu Hydroxylgruppen, Alkoxylierung der Carboxylgruppen oder Veresterung der Carboxylgruppen mit niedermolekularen Diolen von Dimerfettsäuren erhaltenen Polyesterpolyolen,
c) insgesamt 1 bis 10 Gew.-% mindestens einer Säurekomponente, bestehend aus i) Hydroxycarbonsäuren, ii) Aminocarbonsäuren, iii) Aminosulfonsäuren oder iv) Alkalisalzen derartiger Säuren,
d) insgesamt 0 bis 20 Gew.-% einer niedermolekularen Komponente, bestehend aus mindestens einer, mindestens zwei Hydroxyl- und/ oder Aminogruppen enthaltenden Verbindung des Molekulargewichtsbereichs 60 bis 300,
e) insgesamt 0 bis 20 Gew.-% mindestens eines hydrophilen, Ethylenoxideinheiten aufweisenden ein- oder mehrwertigen Alkohols des Molekulargewichtsbereichs 350 bis 3000,
f) insgesamt 5 bis 50 Gew.-% einer Polyisocyanatkomponente, bestehend aus mindestens einem organischen Polyisocyanat des Molekulargewichtsbereichs 168 bis 1000, wobei mindestens 50 Gew.-% der Polyisocyanatkomponente Diisocyanate des Molekulargewichtsbereichs 168 bis 300 darstellen,
wobei sich die genannten Prozentangaben zu 100 ergänzen.

2. Wäßrige Polyester-Polyurethan-Dispersionen gemäß Anspruch 1, dadurch gekennzeichnet, daß die dispergierten Polyesterpolyurethane eine Säurezahl von 8 bis 40 mg KOH/g Feststoff, einen Gehalt an Hydroxylgruppen von 0,5 bis 3,5 Gew.-% und an Urethangruppen von 4 bis 19 Gew.-% aufweisen und Umsetzungsprodukte von
27 bis 70 Gew.-% der Komponente a),
10 bis 60 Gew.-% der Komponente b),
2 bis 7 Gew.-% der Komponente c),
0,5 bis 10 Gew.-% der Komponente d),
0 bis 10 Gew.-% der Komponente e) und
7 bis 30 Gew.-% der Komponente f)
darstellen, wobei als Polyesterpolyole a) Umsetzungsprodukte aus
a1) 30 bis 65 Gew.-% einer Säurekomponente, ausgewählt aus der Gruppe bestehend aus Adipinsäure, Sebacinsäure, Azelainsäure, hydrierten Dimerfettsäuren und Gemischen derartiger Säuren,
a2) 20 bis 65 Gew.-% einer Diolkomponente, ausgewählt aus der Gruppe bestehend aus Ethylenglykol, 1,2- und 1,3-Propandiol, 1,3-und 1,4-Butandiol, 1,6-Hexandiol, Diethylenglykol, Dipropylenglykol, Neopentylglykol und Gemischen dieser Diole und
a3) 0 bis 15 Gew.-% einer Säurekomponente, ausgewählt aus der Gruppe bestehend aus Phthalsäureanhydrid, Isophthalsäure, Hexahydrophthalsäureanhydrid, 1,4-Cyclohexandicarbonsäure, Dimerfettsäuren mit hohen Anteilen an Trimerfettsäuren, Trimerfettsäuren, hydrierten technischen Fettsäuren, Isononansäure, 2-Ethylhexansäure und Gemischen derartiger Säuren und
a4) 0 bis 7 Gew.-% einer Triolkomponente bestehend aus Trimethylolpropan, Glycerin oder Mischungen dieser Triole
darstellen,
die Komponente b) aus einem linearen Polycarbonatdiol des Molekulargewichts 750 bis 4 000 besteht,
die Komponente c) zumindest zu 85 Gew.-% aus 2,2-Dimethylolpropionsäure und/oder 2,2-Dimethylolbuttersäure besteht,
die Komponente d) aus mindestens einem niedermolekularen Diol oder Triol des Molekulargewichts 90 bis 150 besteht und
die Komponente e) zu mindestens 75 Gew.-% aus linearen aliphatischen Diisocyanaten des Molekulargewichtsbereichs 168 bis 300 besteht,
wobei sich die zu a) bis f) und zu a1) bis a4) gemachten Prozentangaben jeweils zu 100 ergänzen.

3. Verwendung der wäßrigen Polyester-Polyurethan-Dispersionen gemäß Anspruch 1 und 2 zur Herstellung von wäßrigen Beschichtungsmitteln auf Basis von in Wasser dispergierten Bindemitteln und Vernetzerharzen, ausgewählt aus der Gruppe bestehend aus Aminoplastharzen, gegebenenfalls hydrophil modifizierten blockierten Polyisocyanaten und gegebenenfalls hydrophil modifizierten Polyisocyanaten mit freien Isocyanatgruppen.

4. Wäßriges, gegebenenfalls die üblichen Hilfs- und Zusatzstoffe enthaltendes Beschichtungsmittel, welches als Bindemittel eine Kombination aus
A) einer Polyolkomponente mit
B) einem Vernetzerharz, ausgewählt aus der Gruppe bestehend aus Melaminharzen, gegebenenfalls hydrophil modifizierten blockierten Polyisocyanaten und gegebenenfalls hydrophil modifizierten Polyisocyanaten mit freien Isocyanatgruppen,
enthält, dadurch gekennzeichnet, daß die Polyolkomponente A) zu 25 bis 100 Gew.-% aus einem Hydroxylgruppen aufweisenden Polyester-Polyurethan der gemäß Anspruch 1 und 2 in Wasser dispergiert vorliegenden Art und zu 0 bis 75 Gew.-% aus anderen, von diesen Polyester-Polyurethanen verschiedenen Bindemitteln besteht.

5. Wäßriges Beschichtungsmittel gemäß Anspruch 4, dadurch gekennzeichnet, daß die Polyolkomponente A) 25 bis 80 Gew.-% aus einem Hydroxylgruppen aufweisenden Polyester-Polyurethan, der gemäß Anspruch 1 in Wasser dispergiert vorliegenden Art und zu 75 bis 20 Gew.-% aus einem anionisch und/oder nichtionisch-hydrophil modifizierten, Hydroxylgruppen-freien PUR-Harz mit einem Molekulargewicht Mw von mindestens 15000 besteht.

## Claims

1. Aqueous dispersions of polyester-polyurethanes having an acid number of from 5 to 60 mg KOH/g of polyester-polyurethane solids, a hydroxyl group content of from 0.25 to 6.5 wt.% and a urethane group content (calculated as -NH-CO-O-) of from 2 to 25 wt.%, referred respectively to polyester-polyurethane solids, characterised in that the polyurethanes, optionally at least partly neutralised by bases, are reaction products of
a) from 15 to 90 wt.% in total of at least one linear polyester polyol in the molecular weight range of from 500 to 4,000, wherein component a) excludes polyols which contain ester groups and are of a kind suitable as component b),
b) from 4 to 75 wt.% in total of at least one other linear polyol, selected from the group comprising i) polycarbonates in the molecular weight range of from 400 to 6,000 which contain hydroxyl groups, ii) polyether polyols in the molecular weight range of from 350 to 3,500, which contain hydroxyl groups and have less than 30 wt.% of ethylene oxide units, referred to all alkylene oxide units present in the form of polyether chains and iii) polyester polyols which contain ester groups and are obtained by hydrogenation of the carboxyl groups to hydroxyl groups, alkoxylation of the carboxyl groups or esterification of the carboxyl groups using low-molecular diols of dimeric fatty acids,
c) from 1 to 10 wt.% in total of at least one acid component, consisting of i) hydroxycarboxylic acids, ii) amino acids, iii) aminosulfonic acids or iv) alkali salts of such acids,
d) from 0 to 20 wt.% in total of a low-molecular component consisting of at least one compound in the molecular weight range of from 60 to 300 which contains at least two hydroxyl and/or amino groups,
e) from 0 to 20 wt.% in total of at least one hydrophilic monohydric or dihydric alcohol in the molecular weight range of from 350 to 3,000 and which contains ethylene oxide units,
f) from 5 to 50 wt.% in total of a polyisocyanate component, consisting of at least one organic polyisocyanate in the molecular weight range of from 168 to 1,000, wherein at least 50 wt.% of the polyisocyanate component consists of linear aliphatic diisocyanates in the molecular weight range of from 168 to 300,
the above-mentioned percentages totalling 100.

2. Aqueous polyester-polyurethane dispersions according to claim 1, characterised in that the dispersed polyester-polyurethanes have an acid number of from 8 to 40 mg KOH/g of solids, a hydroxyl group content of from 0.5 to 3.5 wt.% and a urethane group content of from 4 to 19 wt.% and are reaction products of
from 27 to 70 wt.% of component a),
from 10 to 60 wt.% of component b),
from 2 to 7 wt.% of component c),
from 0.5 to 10 wt.% of component d),
from 0 to 10 wt.% of component e) and
from 7 to 30 wt.% of component f),
wherein the polyester polyols a) are reaction products of
a1) from 30 to 65 wt.% of an acid component, selected from the group comprising adipic acid, sebacic acid, azelaic acid, hydrogenated dimeric fatty acids and mixtures of such acids,
a2) from 20 to 65 wt.% of a diol component, selected from the group comprising ethylene glycol, 1,2- and 1,3-propanediol, 1,3- and 1,4-butanediol, 1,6-hexanediol, diethylene glycol, dipropylene glycol, neopentyl glycol and mixtures of these diols and
a3) from 0 to 15 wt.% of an acid component, selected from the group comprising phthalic anhydride, isophthalic anhydride, hexahydrophthalic anhydride, 1,4-cyclohexanedicarboxylic acid, dimeric fatty acids containing high proportions of trimeric fatty acids, hydrogenated technical fatty acids, isononanoic acid, 2-ethylhexanoic acid and mixtures of such acids and
a4) from 0 to 7 wt.% of a triol component consisting of trimethylolpropane, glycerol or mixtures of these triols,
the component b) consists of a linear polycarbonate diol having a molecular weight of from 750 to 4,000, the component c) consists to the extent of at least 85 wt.% of 2,2-dimethylolpropionic acid and/or 2,2-dimethylolbutyric acid,
the component d) consists of at least one low-molecular diol or triol having a molecular weight of from 90 to 150 and
the component e) consists to the extent of at least 75 wt.% of linear aliphatic diisocyanates in the molecular weight range of from 168 to 300,
the percentages given for a) to f) and for a1) to a4) respectively totalling 100.

3. Use of the aqueous polyester-polyurethane dispersions according to claims 1 and 2 for preparing aqueous coating agents based on binders and cross-linking resins dispersed in water, selected from the group comprising amino resins, optionally hydrophilically modified blocked polyisocyanates and optionally hydrophilically modified polyisocyanates containing free isocyanate groups.

4. Aqueous coating agent, optionally containing the conventional auxiliary substances and additives, which coating contains as binder a combination of
A) a polyol component with
B) a cross-linking resin, selected from the group comprising melamine resins, optionally hydrophilically modified blocked polyisocyanates and optionally hydrophilically modified polyisocyanates containing free isocyanate groups,
characterised in that the polyol component A) consists to the extent of 25 to 100 wt.% of a polyester-polyurethane containing hydroxyl groups and of the kind present dispersed in water according to claims 1 and 2, and to the extent of 0 to 75 wt.% of other binders different from these polyester-polyurethanes.

5. Aqueous coating agent according to claim 4, characterised in that the polyol component A) consists of from 25 to 80 wt.% of a polyester-polyurethane which contains hydroxyl groups and is of the kind present dispersed in water according to claim 1 and to the extent of from 75 to 20 wt.% of an anionically and/or nonionically hydrophilically modified PU resin, free of hydroxyl groups, having a molecular weight Mw of at least 15,000.

## Revendications

1. Dispersions aqueuses de polyester-polyuréthanes à un indice d'acide de 5 à 60 mg de KOH par gramme des matières solides de polyester-polyuréthane, une teneur en groupes hydroxy de 0,25 à 6,5 % en poids et une teneur en groupes uréthanes (exprimée en -NH-CO-O-) de 2 à 25 % en poids, dans les deux cas par rapport aux matières solides de polyester-polyuréthane, caractérisées en ce que les polyuréthanes sont des produits de réaction, éventuellement neutralisés en partie au moins par des bases, de
a) au total 15 à 90 % en poids d'au moins un polyester-polyol linéaire de poids moléculaire 500 à 4000, les polyols à groupes esters intervenant dans le composant b) étant exclus pour le composant a),
b) au total 4 à 75 % en poids d'au moins un autre polyol linéaire choisi dans le groupe consistant en i) les polycarbonates à groupes hydroxy de poids moléculaire 400 à 6 000, ii) les polyéther-polyols à groupes hydroxy de poids moléculaire 350 à 3 500 et contenant moins de 30% en poids de motifs d'oxyde d'éthylène, par rapport à tous les motifs d'oxydes d'alkylène présents sous la forme de chaînes de polyéthers, et iii) des polyester-polyols à groupes esters, obtenus à partir d'acides gras dimères par hydrogénation des groupes carboxyles en groupes hydroxy, alcoxylation des groupes carboxyles ou estérification des groupes carboxyles par des diols à bas poids moléculaire,
c) au total 1 à 10 % en poids d'au moins un composant acide consistant en i) des acides hydroxycarboxyliques, ii) des acides aminocarboxyliques, iii) des acides aminosulfoniques ou iv) les sels alcalins de ces acides,
d) au total 0 à 20 % en poids d'un composant à bas poids moléculaire consistant en au moins un composé contenant au moins deux groupes hydroxy et/ou amino, à un poids moléculaire de 60 à 300,
e) au total 0 à 20% en poids d'au moins un alcool mono- ou di-valent hydrophile, contenant des motifs d'oxyde d'éthylène, de poids 350 à 3 000,
f) au total 5 à 50 % en poids d'un composant polyisocyanate consistant en au moins un polyisocyanate organique de poids moléculaire 168 à 1 000, au moins 50 % en poids du composant polyisocyanate consistant en diisocyanates de poids moléculaire 168 à 300,
les pourcentages indiqués se complétant à 100.

2. Dispersions aqueuses de polyester-polyuréthanes selon la revendication 1, caractérisées en ce que les polyester-polyuréthanes dispersés ont un indice d'acide de 8 à 40 mg de KOH par gramme des matières solides, une teneur en groupes hydroxy de 0,5 à 3,5 % en poids et une teneur en groupes uréthanes de 4 à 19 % en poids, et consistent en produits de réaction de
27 à 70 % en poids du composant a),
10 à 60 % en poids du composant b),
2 à 7 % en poids du composant c),
0,5 à 10 % en poids du composant d),
0 à 10 % en poids du composant e), et
7 à 30 % en poids du composant f),
et
les polyester-polyols a) sont des produits de réaction de
a1) 30 à 65 % en poids d'un composant acide choisi dans le groupe consistant en l'acide adipique, l'acide sébacique, l'acide azélaïque, les acides gras dimères hydrogénés et les mélanges de ces acides,
a2) 20 à 65 % en poids d'un composant diol choisi dans le groupe consistant en l'éthylèneglycol, le 1,2- et le 1,3-propanediol, le 1,3- et le 1,4-butanediol, le 1,6-hexanediol, le diéthylèneglycol, le dipropylèneglycol, le néopentylglycol et les mélanges de ces diols et
a3) 0 à 15 % en poids d'un composant acide choisi dans le groupe consistant en l'anhydride phtalique, l'acide isophtalique, l'anhydride hexahydrophtalique, l'acide 1,4-cyclohexanedicarboxylique, les acides gras dimères à forte proportion d'acides gras trimères, les acides gras trimères, les acides gras techniques hydrogénés, l'acide isononanoïque, l'acide 2-éthylhexanoïque et les mélanges de ces acides et
a4) 0 à 7 % en poids d'un composant triol consistant en le triméthylolpropane, le glycérol ou un mélange de ces triols,
le composant b) consiste en un polycarbonate-diol linéaire de poids moléculaire 750 à 4 000,
le composant c) consiste pour au moins 85 % en poids en acide 2,2-diméthylolpropionique et/ou acide 2,2-diméthylolbutyrique,
le composant d) consiste en au moins un diol ou triol à bas poids moléculaire, de poids moléculaire 90 à 150 et
le composant e) consiste pour au moins 75 % en poids en diisocyanates aliphatiques linéaires de poids moléculaire 168 à 300,
les pourcentages indiqués pour a) à f) et pour a1) à a4) se complétant à 100.

3. Utilisation des dispersions aqueuses de polyester-polyuréthanes selon les revendications 1 et 2 pour la préparation de produits de revêtement aqueux à base de liants dispersés dans l'eau et de résines réticulantes choisies dans le groupe consistant en les résines aminoplastes, les polyisocyanates bloqués éventuellement à modification hydrophile et les polyisocyanates à groupes isocyanates libres, éventuellement à modification hydrophile.

4. Produit de revêtement aqueux, contenant le cas échéant les additifs et produits auxiliaires usuels, qui contient en tant que liant une combinaison de
A) un composant polyol avec
B) une résine réticulante choisie dans le groupe consistant en les résines de mélamine, les polyisocyanates bloqués éventuellement à modification hydrophile et les polyisocyanates à groupes isocyanates libres éventuellement à modification hydrophile,
caractérisé en ce que le composant polyol A) consiste pour 25 à 100 % en poids en un polyester-polyuréthane à groupes hydroxy selon les revendications 1 et 2, à l'état dispersé dans l'eau, et pour 0 à 75 % en poids en d'autres liants, différents de ces polyester-polyuréthanes.

5. Produit de revêtement aqueux selon la revendication 4, caractérisé en ce que le composant polyol A) consiste pour 25 à 80% en poids en un polyester-polyuréthane à groupes hydroxy du type dispersé dans l'eau selon la revendication 1 et pour 75 à 20 % en poids en une résine de polyuréthane exempte de groupes hydroxy, à modification anionique et/ou non ionique-hydrophile, à un poids moléculaire Mw d'au moins 15 000.
